(19) Europäisches Patentamt
European Patent Office
Office européen des brevets

(11) **EP 1 354 009 B1**

(12) **EUROPEAN PATENT SPECIFICATION**

(45) Date of publication and mention of the grant of the patent:
**04.03.2009 Bulletin 2009/10**

(51) Int Cl.:
***C09D 125/10*** *(2006.01)*   ***D21H 19/58*** *(2006.01)*
***C09D 113/02*** *(2006.01)*

(21) Application number: **02723055.6**

(22) Date of filing: **15.01.2002**

(86) International application number:
**PCT/US2002/001085**

(87) International publication number:
**WO 2002/070615 (12.09.2002 Gazette 2002/37)**

(54) **BIMODAL AQUEOUS POLYMER DISPERSIONS**

WÄSSRIGE BIMODALE KUNSTSTOFFDISPERSIONEN

DISPERSIONS POLYMERES AQUEUSES BIMODALES

(84) Designated Contracting States:
**AT BE CH CY DE DK ES FI FR GB GR IE IT LI LU MC NL PT SE TR**

(30) Priority: **17.01.2001 US 262160 P**

(43) Date of publication of application:
**22.10.2003 Bulletin 2003/43**

(73) Proprietor: **DOW GLOBAL TECHNOLOGIES INC. Midland MI 48674 (US)**

(72) Inventors:
• **SALMINEN, Pekka, J.**
  **CH-8854 Galgenin (CH)**
• **LAZARUS, Etienne, R.**
  **F-67500 Marienthal (FR)**
• **STOLLMAIER, Friederike, T.**
  **77836 Rheinmuenster (DE)**

(74) Representative: **Raynor, John et al**
  **Beck Greener**
  **Fulwood House,**
  **12 Fulwood Place,**
  **London WC1V 6HR (GB)**

(56) References cited:
EP-A- 0 652 269      WO-A-84/04491
US-A- 4 567 099      US-A- 5 686 518
US-A- 5 726 259      US-A- 5 990 221

**Description**

The present invention relates to dispersions of polymer particles having two separate maxima of the particle size distribution (bimodal dispersions) wherein the small particle size fraction is in the nano-particle size range. The invention also relates to a process for producing these low viscosity, high-solids bimodal latex dispersions. It also relates to the use of these high-solids latex dispersions as binders for the preparation of paper coatings having low high-shear viscosity, high-solids, high water retention, and good runability.

Paper is often coated to improve its optical and printing properties. For example, synthetic latexes or natural binders such as proteins or starch are employed as coatings alone or as components of pigmented coatings to increase the strength and the printability of the paper. The use of synthetic latexes as binders has become popular due to the desirable properties exhibited by said latexes. For coating, the properties of the coating color must be optimised for the coating process and the intended use of the coated paper. The solids content greatly influences the runability of the coating color in the coating machine, and greatly influences the viscosity of the color and its flow behavior at varying shear stresses in the coating machine. The various components of the coating color determine the solids content attainable at a given viscosity. The highest possible solids content is desired in order to save drying energy and to improve the coating hold out. For most coating processes, the water retention capacity; that is, the ability of the coating color to retain water despite the suction action of the base paper, of the coating color is also important. If the water retention capacity of a coating color is too low, it may be too strongly dewatered between application and leveling.

Coatings are often applied to continuous web materials such as paper through the use of a high speed coating devices. For example, when a blade coater is employed, the properties of the coating that is applied to the paper can be varied by altering the blade thickness or the blade angle of the coater, the amount of pressure applied to the blade, or the rheology of the coating itself.

It is desirable that latexes that are applied using coating devices remain as discrete, stable, free moving particles in order to obtain trouble-free runability. However, when a latex-containing coating formulation is subjected to high shear, such as, for example, in a blade coater, the formulation can exhibit a shear thinning or shear thickening behavior. Decreasing the solids content in the coating formulation can reduce shear thickening. Although a reduction in the amount of solids will improve the runability of the formulation, the quality of the resulting coating can be adversely affected by low coating weight or excess "diving in" of the coating into the paper substrate. It is desirable to have greater coating "hold-out" on the surface of the paper so as to achieve paper exhibiting improved printing quality.

Coating formulations that can be run at increasingly high-solids facilitate the production of high quality coatings. High-solids coatings typically can be obtained by adding dry pigment to pigment slurries. However, a high-solids latex reduces or eliminates the need for dry pigment addition. In addition, high-solids coatings are desirable for increasing production rates and reducing energy costs. High-solids versions of conventional latexes are limited in their use as paper coatings due to the resulting high viscosity of the coating formulation at high shear rates. This leads to poor blade coater runability. Typically, poor runability is characterized by scratching or streaking of the coating, high blade pressure or lack of coat weight control (that is, very high coating weights and/or uneven coatings).

High-solids formulations for coating paper are disclosed in U.S. Patents 4,474,860 and 4,567,099. The disclosed formulations comprise a high-solids synthetic bimodal styrene/butadiene type latex comprising two separate and distinct particle size distributions. Such formulations are disclosed as exhibiting good runability during application using a device such as a blade coater. However, it would be desirable to provide a formulation for coating paper which, in addition to the previously described desirable properties, exhibits high sheet gloss when applied to paper, exhibits a high ink gloss after inking of paper is performed, exhibits a high porosity and ink receptivity when applied to paper, and exhibits good binding strength. Canadian Patent 2,135,450 describes bimodal latexes that have a relatively low solids content.

In view of the deficiencies of the prior art, particularly in view of the desirability of providing improved paper coating formulations, it would be highly desirable to provide a high-solids polymer dispersion (synthetic latex) which may be used for preparing a paper coated with a high-solids coating formulation exhibiting high water retention and good runability during application with a device such as a blade coater.

The dispersion of polymer particles according to the invention comprises at least two separate maxima of the particle size distribution, wherein the two maxima are in the range from 13 to 50 nm and from 90 to 140 nm, respectively, and the weight ratio of the small particles to the large particles is 10/90 to 40/60, and wherein the solid content is higher than 55 percent.

The present invention in another aspect is a high-solids formulation for coating paper which comprises an aqueous medium having dispersed therein a finely divided mineral filler or pigment and a high-solids bimodal polymer dispersion (latex) having the above-described two maxima of the particle size distribution. The coating formulation of the present invention can have a solids content which is higher than the solids content exhibited by a coating formulation which is identical to the formulation of the invention except that it contains a monodisperse or highly multi-disperse latex rather than the latex of the present invention, and as such can have a viscosity over a broad range of shear rates which are lower than those exhibited by the formulation containing a monodisperse or highly multi-disperse latex. The small latex particles of said distribution of the bimodal latex permit an increase in the solids content of the coating formulation as they contribute to a decrease in viscosity at high shear and an increase of the water retention of the formulation over that of a formulation comprising a monodisperse latex of a particle size similar to that of the large latex particle distribution of the bimodal latex. However, monodisperse latexes with such small particle sizes can only be produced at lower latex solids and would therefore reduce the coating formulation solids. The large particle size component of the latex of the invention is essential to obtain a high-solids latex with acceptable viscosity for processing and which latex adds a low amount of water to the coating formulation required to achieve high coating formulation solids. The size of the large particles must remain in the described range; a particle size that is too low will limit the latex solids while a particle size that is too high will increase the high shear viscosity.

The combination of large and small particles as described in the invention is critical to achieve the high-solids of the latex dispersion combined with a high coating formulation solids content.

Furthermore, the present invention provides processes for the preparation of the bimodal latexes, that is, by blending different latexes or controlling the polymerization process by adding suitable seed particles or surfactants.

In another aspect, the present invention is a process for coating paper which comprises applying the formulation of this invention to said paper using a coating device. In yet another aspect, this invention is a coated article comprising a fibrous sheet continuously coated on at least one surface with the formulation of this invention.

The process of this invention yields improved coating compositions which are high in solids and show excellent water retention and thus provide high quality paper. In addition, the process of this invention provides a method for easily applying latex coatings to paper due to the low viscosity, good runability and good high shear rheology provided by the bimodal latex. For purposes of this invention, the term, "high-solids" refers to a formulation comprising a dispersed phase and a continuous phase wherein the volume fraction of the dispersed phase approaches the limit at which the formulation no longer exhibits a manageable viscosity. Similarly, by the term, "latex with a high-solids content" is meant a latex comprising polymer particles in amounts such that said latex approaches the limit at which it no longer exhibits a manageable low shear viscosity. Similarly, by the term, "high-solids coatings" is meant a coating formulation that can comprise solids such as natural binders, carbonates, clays, synthetic latexes, and which, for a particular formulation, contains solids in amounts such that the formulation approaches a limit at which said formulation no longer exhibits a manageable high shear viscosity. The term "viscosity which is no longer manageable" means that a formulation is too thick to handle and use in standard paper coating procedures, as is well known to those skilled in the paper coating art.

The bimodal polymer dispersion of this invention comprises large-size polymer particles and small-size polymer particles. The particle size distribution of the particles in the dispersion is determined using hydrodynamic chromatography. The diameter of the small-size particles that are present in the highest volume concentration is in the range of from 13 to 50 nm, preferably from 13 to 30 nm and most preferably from 20 to 40 nm. The diameter of the large-size polymer particles that are present in the highest volume concentration is in the range of from 90 to 140 nm and most preferably from 110 to 140 nm. For the purposes of the present invention, the term maxima of the particle size distribution" refers to the maxima of the curve of particle volume concentration versus particle diameter as determined using hydrodynamic chromatography.

The weight percentage of the large-size polymer particles in the dispersion exceeds the weight percentage of the small-size polymer particles. Particularly, the weight ratio of the small particles to the large particles is within the range of from 10/90 (0.11) to 40/60 (0.67), preferably from 20/80 (0.25) to 35/65 (0.54) and most preferably from 24/76 (0.32) to 30/70 (0.43). A very suitable ratio is 27/73.

The polymer particles of this invention are prepared by, for example, emulsion polymerization from combinations of monomers such that the resulting particles have sufficient adhesive properties for, for example, paper coating applications. Virtually any polymer dispersion (latex) that can be used as a paper coating binder and that can be prepared with a bimodal particle size distribution corresponding to the above description can be employed. It is also desirable that the latex be carboxylated in order to increase colloidal stability and, hence, the degree of binding efficiency to the paper and pigments. Examples of suitable carboxylic acid monomers include acrylic acid, methacrylic acid, itaconic acid and fumaric acid. Typically, the minimum film formation temperature of the latex composition is less than 30 °C. Representative monomers useful in preparing the latexes of this invention and methods for preparing the individual separate particles are described in U.S. Patents 3,404,116 and 3,399,080. Examples of preferred monomers suitable for preparing the latexes of this invention include butadiene, styrene, acrylonitrile, vinyl acetate, alkyl acrylates, hydroxyalkyl acrylates, alkyl methacrylates, hydroxyalkyl methacrylates, acrylamide, and n-methylolacrylamides. Especially preferred latexes include modified styrene/butadiene latexes such as, for example, styrene/butadiene/acrylic acid, styrene/butadiene/acrylic acid/itaconic acid, styrene/butadiene/β-hydroxyethyl acrylate, styrene/butadiene/β-hydroxyethylacrylate/acrylic acid, styrene/butadiene/acrylonitrile/acrylic acid, styrene/n-butylacrylate/acrylic acid, methylmethacrylate/n-butylacrylate/acrylic acid, vinyl acetate/acrylic acid, vinyl acetate/n-butylacrylate/acrylic acid, styrene/butadiene/methylmethacrylate/acrylic acid, styrene/butadiene/methylmethacrylate/acrylonitrile/acrylic acid, and/or styrene/n-butyl acrylate/butadiene/acrylic acid. Mixtures of carboxylic acids can be employed in the aforementioned latexes.

The bimodal polymer dispersion of the invention can be prepared by blending polymer dispersions that each have just one maximum of the two desired maxima in the particle size distribution. Alternatively, bimodal dispersions (latexes) can be prepared by intermediate addition of a seed latex during the emulsion polymerization process. For example, the large size particle can be prepared, and either simultaneously to or after the large size particle is formed, the seed latex can be added in order to provide the small size polymer particles. It is also possible to prepare the bimodal latex by a polymerization in the presence of two (seed) latexes containing particles of different diameters as disclosed in U.S. Patent 4,456,726. East German Pat. Appl. 274 229 describes a further preparation process wherein the bimodal particle size distribution is controlled by the presence of an emulsifier (surfactant). This can also be applied to the present invention. Any of the latex formulations can be concentrated, if desired, using methods well known to those skilled in the art.

The process of this invention offers a combination of two desirable properties: High solids of the latex and high solids of coating formulations with improved viscosity at the application shear rates. It is desirable that the runability of the coating formulation containing the latex be good for easy and effective application using a coating device, that is, it is desirable that the viscosity of the coating formulation containing the latex be low at high shear rates. For purposes of this invention, "low shear" means shear rates of less than 5000 mPa*s. For purposes of this invention "high shear" means shear rates of more than 10,000 mPa*s. This low viscosity at high shear rates is generally accomplished by employing latexes in a small particle size range. However, it is also desirable that the latex be of high solids. High-solids latexes typically are composed of particles of relatively large size that have a broad particle size distribution. However, such large size particles do not exhibit a tendency to move well relative to one another under conditions of high shear and do not provide acceptable high shear viscosity in coating formulations. The bimodal latex of the present invention exhibits low viscosity at low shear rate even at high-solids content. On the other hand, the bimodal latex of the present invention allows the preparation of high-solids content coating formulations with an acceptably low value of the high shear viscosity. Typically, the use of a bimodal latex of the present invention in a coating formulation results in superior coating runability over that of the corresponding monodisperse large particle size latex. As a result, higher coating formulation solids can be used with the bimodal latexes than those prepared with the corresponding monodisperse latex. In addition, the bimodal latexes according to the present invention yield coating formulations which exhibit coating runability (that is, low viscosity at high shear) which is comparable or better than that of a conventional small particle size, monodisperse latex.

In addition, paper coating formulations containing bimodal latexes of this invention provide excellent coating water retention, thereby allowing reduction or elimination of the thickener/water retention additive used in normal paper coating formulations.

Coating formulations, commonly referred to in the art as coating colors, of this invention comprise an aqueous medium, an amount of a finely divided mineral filler or pigment and a bimodal latex of the invention. Examples of mineral fillers or pigments include those known in the art such as clay, calcium carbonate, titanium dioxide. The amount of pigment that is employed can vary depending upon its density and the coating properties desired. Typically, coating formulations comprise 100 parts pigment and 1 to 50, preferably 2 to 20, more preferably 8 to 14, parts of bimodal latex by weight. Each of the aforementioned components is mixed in an aqueous medium to yield a formulation that is 60 to 75 percent solids by weight. Typically, coating formulations of this invention are at least 1 percent higher in solids than those formulations comprising monodisperse or highly multi-disperse latexes and exhibiting comparable viscosities. The average particle size of the pigment suitably is within the range of from 1 to 3 $\mu$m. It is also understood that other additives known in the art which include cobinders, thickeners, and water retention aids can be added to the coating formulation. Such additives are disclosed in the aforementioned U.S Patent 3,399,080.

The process of this invention yields an improved method of applying latex coating formulations to paper as, for example, binders. The coatings as described herein are most desirably applied to the paper through coating devices such as blade coaters, which are described in "Coating Equipment and Processes," O. L. Booth, Lookwood Publishing Co., Inc., 1970. Other methods for applying coatings to paper can include the use of coating devices such as air knife coaters, rod coaters, roll coaters, and premetered size presses which are described in the aforementioned reference or are extensively used in the paper coating industry.

In particular, it has been observed that coating formulations comprising the high-solids latex compositions of this invention exhibit excellent high speed film coater runability. Misting and rod spitting are the two dominant runability problems in high-speed film coating. Small coating color droplets being formed at the outlet of the coating nip cause misting. Rod spitting, on the other hand, is the runability defect observed at the premetering rod. Usually, misting can be reduced by increasing coating solids, but then rod pressure and spitting will increase. On the other hand, spitting can be reduced by lowering the coating solids, but this will increase misting. A unique combination of low misting and low rod spitting has been observed when using coating formulations comprising the high-solids latex compositions of this invention.

The bimodal latexes of the invention are most advantageously employed as excellent coatings for paper. Particularly interesting are those applications where high-solids formulations are useful in the production of fine quality, high gloss paper. Paper coated with the high-solids coatings comprising the high-solids latex compositions of this invention exhibits higher sheet gloss, higher binding strength and lower ink refusal as compared to paper coated with a formulation comprising a monodisperse latex of the same particle size as the large particle fraction of the bimodal latex. Additionally, latexes of the invention can also be employed in a wide variety of end-use applications such as, for example, in coating formulations such as paints, as impregnants, and in adhesive compositions. In such instances, the bimodal latexes are suitably employed pursuant to known techniques and procedures that are conventionally employed with other types of latexes in the chosen type of end-use application.

The following examples are given for the purpose of illustrating the present invention and are not to be construed as limiting its scope. The comparative examples do not represent embodiments of the invention. Unless otherwise indicated, all parts and percentages are by weight. The physical properties mentioned in the examples were determined according to the following methods:

Brookfield Viscosity

The Brookfield viscosity was measured using a Brookfield RVT viscosimeter (available from Brookfield Engineering Laboratories, Inc., Stoughton, Massachusetts, USA) at 23°C. For measuring, 600 ml of the dispersion or of the coating color were poured into a 1000 ml beaker and the viscosity was measured at spindle speeds of 20, 50 and 100 rpm.

Haake Viscosity

The Haake Viscosity was measured with a Haake Rotovisco RV20 with a Rheocontroller RC20 and the measuring head SVSP (available from Haake GmbH, Karlsruhe) at 23°C in the shear rate range from $200 \text{ s}^{-1}$ to $4500 \text{ s}^{-1}$.

ACAV High Shear Viscosity

The high shear viscosity was measured with a capillary viscometer supplied by ACA(Finland). The coating colour was filled into a cylinder and pressed through a capillary with a piston. The shear rate was set before the measurement and this resulted in a defined flow through the capillary. The pressure required to achieve the flow was measured. In this study, the capillaries had a diameter of 0.4 mm and length of 50 mm. The maximum pressure of 350 atm allowed the viscosity to be studied up to a shear rate of $1.500.000 \text{ s}^{-1}$.

ABO Dewatering (AAGWR)

The dewatering value was measured with an ABO Akademi AAGWR Dewatering Device. A 10 ml sample of the coating composition was filled into a cylinder and pressurized for 1.5 min with a pressure of 1 bar. The aqueous filtrate passed a Nucleopore 1113 membrane of 5 $\mu$m thickness and was absorbed by a Whatman No. 17 chromatographic paper. The amount of water absorbed by the chromatographic paper was specified in g of water absorbed per $m^2$ of paper. The dewatering value is a measure of the water retention capacity of the coating under pressure. High values are indicative of a low water retention capacity under the coating conditions and could have resulted in runability deficiencies.

K & N (percent Drop in Brightness):

This test measures the ability of the paper surface to absorb printing inks. The test was carried out on an Elrepho 2000 instrument.
K&N ink was applied with a metallic spatulum onto the lower half of a coated paper test strip. After 2 minutes (min) of penetration time, the ink was wiped off with tissue paper. The brightness was then measured in both areas of the paper test strip, that is, the area with ink and the area without ink. To obtain the K&N percent drop in brightness, the brightness of the area with ink was subtracted from the area without ink (original brightness) and the result divided by the original brightness multiplied by 100.

Dry Pick Resistance (IGT)

The test measured the ability of the paper surface to accept the transfer of ink without picking. The test was carried out on an A2 type printability tester, commercially available from IGT Reprotest BV. Coated paper strips (4 mm x 22 mm) were printed with inked aluminum disks at a printing pressure of 36 N with the pendulum drive system and the high viscosity test oil (red) from Reprotest BV. After the printing was completed, the distance where the coating begins to show damage was marked under a stereomicroscope. The marked distance was then transferred into the IGT velocity curve and the velocities in cm/s were read on the used drive curve.
High velocities indicate high resistance to dry pick.

New Wet Pick

This test measures the occurrence of picking in the presence of water introduced in the printing process. Two coated paper test strips were divided into three equal sections. The middle section of one strip was wetted with 12 mm$^3$ of water. This strip was then printed with a test ink commercially available under the trade designation Huber Rupftestfarbe No. 3 and designated as "original print." Then, an off-print onto the second paper strip was made which was designated "offprint." The densities of both paper strips were measured with a densitometer using a red filter. The densitometer was commercially available from Gretag. The densities were measured at (A) the side positions of the original print (without water), (B) at the middle position of the original print (with water), (C) at the side position of the off-print (without water), and (D) at the middle position of the off-print. The wet pick was calculated using the following equation:

$$X = \text{ink transfer} = B/A \text{ x } 100 \text{ percent}$$

$$Y = \text{ink refusal} = ((100 - D - (X \text{ x } C)) / (100 \text{ x } A)) \text{ x } 100 \text{ percent}$$

$$Z = \text{wet pick} = 100 - X - Y \text{ (percent)}$$

Ink refusal

Ink refusal was tested on a Pruefbau printability tester. An excess of water was applied on paper surface and the paper was printed with an ink available under the trade name Lorilleux 3800. The ink density of the wetted, as well as unwetted, printing surfaces was measured using a Gretag ink densitometer. The ink density difference was reported as a measure of ink refusal due to insufficient fountain water absorption.

Ink Set Off

Ink set off was tested on a Pruefbau printability tester. Paper strips were printed with ink commercially available under the trade name Huber Wegschlagfarbe No. 520068. A starting amount of 250 mm$^3$ was applied to an ink distribution roll. A steel printing disk was inked to achieve an ink volume of 30 mm$^3$ and a coated paper strip was printed with the inked steel disk. The printing speed was 1.5 m/sec and the printing pressure was 1000 N. An off print was made towards a standard strip commercially available from Scheuffelen under the designation Kunstdruckpapier APCO II/II 150 g/m$^2$ with a steel set off disc and a pressure of 400 N. An off-print was made after 15 s, 30 s, 60 s and 120 s. The ink density of the off print was measured using a Gretag ink densitometer. It was a measure of the drying rate of the ink.

Ink Piling

Ink piling was tested on a Pruefbau printability tester. Paper strips were printed with an ink commercially available under the trade name Huber Wegschlagfarbe No. 520068. A starting amount of 500 mm$^3$ was applied to an ink distribution roll. A steel printing disk was inked to achieve an ink volume of 60 mm$^3$. A coated paper strip was mounted on a rubber-backed platten and printed with the inked steel disk at a speed of 1.5 m/s and a printing pressure of 800 N. After a 10-second delay time, the paper strip was re-printed using a vulcanised rubber printing disk also containing 60 mm$^3$ of ink and at a printing pressure of 800 N. This procedure was repeated until the surface of the coated paper strip had ruptured. The number of printing passes required to rupture the coated paper surface was a measure of the surface strength of the paper.

Paper Gloss

Paper gloss was measured using a Zehntner ZLR-1050 instrument at an incident angle of 75°. A black standard was used for calibration.

Ink Gloss

The test was carried out on a Pruefbau Test Printing unit with Lorrilleux Red Ink No. 8588. An amount of 0.8 g/m$^2$ (or 1.6 g/m$^2$ respectively) ink was applied on to coated paper test strips mounted on a long rubber backed former with a steel printing disk. The pressure of the inking system application was 1,000 N and the speed was 1 m/s. The printed strips were dried for 12 hr at 20°C at 55 percent minimum room humidity. The gloss was then measured on a Zehntner ZLR-1050 instrument at an incident angle of 75°.

ISO- Brightness (UV)

The ISO brightness was measured with a Zeiss Elrepho spectrophotometer. The reflected light of a wavelength of 457 nm was measured.
The coating test was carried out with a base paper of 80 g/m$^2$. The coat weight was 14 g/m$^2$ and the coating was applied with a laboratory blade coater at a coater speed of 25 m/min using a 0.3/76 mm blade at a blade pressure of 1.0 psi (6895 Pa). The paper was dried at 180°C and calendered at 80°C with a calender speed of 20 m/min and a linear pressure of 180 N/m (2 nips per side).

Example 1 and Comparative Examples 1 to 3

In Example 1 and Comparative Examples 1 to 3 coating compositions are prepared by mixing the following:

| 100 parts | of a calcium carbonate dispersion wherein 90 percent of the particles are smaller than 2$\mu$m (Hydrocarb® 90), |
| 0.5 parts | of carboxymethyl cellulose (Finnfix 5®) and |
| 12 parts | of a monomodal latex (Comparative Example 1) or a bimodal latex (Comparative Example 2 and 3 and Example 1). |

For the purposes of the present invention, the term "particle size" means volume average particle size as determined using hydrodynamic chromatography. Latexes with particle sizes of 20 nm, 40 nm and 60 nm were prepared using respectively 20 weight parts based on 100 parts of monomer of Sodium laurylsulfate (SLS) in the initial charge, 4 parts SLS and 1.4 part SLS. Latexes with particle sizes of 120 nm and 180 nm were synthesized using respectively 1.18 and 0.34 weight parts based on 100 parts of monomer of a polystyrene seed having a particle size of 27 nm. A latex with a particle size of 240 nm was prepared using 1.5 weight parts based on 100 parts of monomer of the previously made 60 nm latex.
Blends containing 27 weight percent of smaller particle size latexes and 73 weight percent of larger particle size latexes were prepared and concentrated by water evaporation under vacuum to achieve a blend solids of 56 percent.
A commercial latex designated DL920 with a monomodal particle size of 140 nm, as supplied by Dow Europe S.A. was used for Comparative Example 1.
The particle sizes of the latexes are shown in Table 1 as well as the formulation viscosities according to Brookfield, Haake and ACAV at different shear rates. The weight ratio of small particles to large particles of the bimodal latexes is 27/73. All coating formulations have a solids content of 70.0 percent and their pH was adjusted to 9.0 with sodium hydroxide.

Table 1

| Example | N° | | | | 1 |
|---|---|---|---|---|---|
| Comp. Example | N° | 1 | 2 | 3 | |
| Particle sizes (nm) | | 140 | 60/240 | 40/180 | 20/120 |
| Brookfield | 20rpm mpa·s | 10720 | 11800 | 12600 | 9990 |
| | 100rpm mPa·s | 2800 | 3040 | 3320 | 2620 |
| Haake | 1.000 1/s mPa·s | 175 | 166 | 218 | 156 |
| | 2.000 1/s mPa·s | 127 | 119 | 127 | 116 |
| | 4.000 1/s mPa·s | 99 | 92 | 100 | 93 |

(continued)

| Example | N° | | | | 1 |
|---|---|---|---|---|---|
| Comp. Example | N° | 1 | 2 | 3 | |
| Particle sizes (nm) | | 140 | 60/240 | 40/180 | 20/120 |
| ACAV | 20.0001/s    mPa·s | 58 | 69 | 71 | 50 |
| | 100.0001/s    mPa·s | 58 | 71 | 63 | 48 |
| | 600.000 1/s    mPa·s | 59 | 69 | 60 | 43 |
| | 900.000 1/s    mPa·s | 56 | 66 | 57 | 40 |
| ABO Dewatering | | 178 | 142 | 114 | 95 |

As shown in Table 1, the combination of low dewatering and low high shear viscosity (ACAV) is only reachable with the latex dispersion having a bimodal particle size distribution with both particle populations being small (Example 1). Neither monodisperse nor bimodal latexes with size distributions as known from the prior art show the specific combination of low high shear viscosity and low dewatering.

Table 2 shows the properties of papers coated with the example of the present invention (Example 1) compared to a good binding strength and good printability latex, DL920 (Comparative Example 1) (commercially available from Dow Europe S.A.). The paper properties of the coating prepared with the latex of Example 1 are very comparable to the good printability, high strength coating prepared with the latex of Comparative Example 1.

Table 2

| Example | | C.E. 1 | 1 |
|---|---|---|---|
| | | | |
| Paper Gloss 75° | Percent | 56 | 54 |
| Ink Gloss | 1.6 g/m$^2$ percent | 88 | 89 |
| ISO Brightness | Percent | 97.0 | 97.0 |
| Remission | Percent | 83.0 | 83.0 |
| K & N Drop | percent | 8.4 | 8.1 |
| IGT Dry Pick | cm/s | 107 | 119 |
| New Wet Pick | Ink transfer (percent) | 83 | 87 |
| Ink no: huber 4 | Ink refusal (percent) | 17 | 10 |
| | Wet pick (percent) | 0 | 3 |
| Ink Set Off | Density after 15 sec | 0.95 | 0.84 |
| | Density after 30 sec | 0.57 | 0.50 |
| | Density after 60 sec | 0.22 | 0.21 |
| | Density after 120 sec | 0.03 | 0.04 |
| Ink Piling | Passes to fail | 10 | 9 |

Examples 2 to 5

The preparation of bimodal latexes from monomodal latexes, by initiating a second particle nucleation through the addition of an emulsifier (surfactant) is shown in Examples 2 to 5.

An initial charge containing water, 0.1 part Dowfax 2A1® [sodium dodecyldiphenyl oxide sulfonate] and 0.72 part of a styrene polymer latex with a particle size of 27 nanometers was heated to 85 °C. Then, a monomer stream containing 23.75 parts styrene, 19.3 parts butadiene, 2.3 parts acrylic acid and 3.25 parts acrylonitrile and 0.65 parts t-dodecylmercaptan [as chain transfer agent] was added to the reactor over a period of 170 minutes, followed during an additional 170 minutes by another monomer stream containing 25.15 parts styrene, 19.3 parts butadiene, 3.7 parts acrylic acid and 3.25 parts acrylonitrile and 0.65 parts t-dodecylmercaptan.

A stream containing 12 parts of water, 1.3 part of sodium persulfate, 0.5 part of a sodium lauryl ether sulfate containing 10 moles of ethylene oxide per molecule, 0.42 part of Dowfax 2A1® (Dowfax 2A1 is a trademark of The Dow Chemical Company) and 0.2 part of sodium hydroxide was added continuously over 350 minutes. An additional stream containing 1 part water and 2 or 3 parts sodium lauryl sulfate (SLS) or Dowfax 2A1® was started after 170 minutes for 30 minutes. The solids content of the latex was 58.5 percent. The pH after reaction completion was increased to 6 with sodium hydroxide and residual monomer content was reduced by steam stripping. The particle size distribution was measured with hydrodynamic chromatography.

The results are shown in Table 3 below.

Table 3

| Example | 2 | 3 | 4 | 5 |
|---|---|---|---|---|
| Emulsifier | 3 parts SLS | 2 parts SLS | 3 parts 2A1 | 2 parts 2A1 |
| Part. Size small (nm) | 25 | 28 | 28 | 28 |
| Part. Size large (nm) | 131 | 134 | 138 | 137 |
| Ratio small/large | 35/65 | 32/68 | 31/69 | 27/73 |
| Latex Solids (percent) | 56.2 | 57.3 | 56.2 | 57.2 |
| Viscosity (50 rpm, pH 6) | 604 | 750 | 423 | 636 |

The bimodal latexes of the present invention show low Brookfield viscosity at high-solids content.

Examples 6 to 10

Examples 6 to 10 were prepared according to the procedure given for Examples 2 to 5, with the exceptions that a level of 4 parts SLS was used for initiating the second particle nucleation and that the feed time of SLS was varied. In addition, Examples 6 to 8 contained 0.5 parts of fumaric acid in the initial charge. The feed time variations of the SLS are given in Table 4. Latex and Coated Paper properties obtained with Examples 6 to 10 are given in Table 4.

Coating compositions are prepared by mixing the following:

    80 parts of Calcium carbonate pigment (Setacarb OG 8), supplied by Omya
    20 parts of clay pigment (Hydragloss 90), supplied by Omya
    0.5 parts of polyvinyl alcohol (PVOH 6/98), supplied by Clariant and
    1.5 parts of optical brightener (Blancophor P), supplied by Bayer

with 11 parts of latex.

The solids content for each formulation was determined and is given in Table 4, the pH value of all formulations was adjusted to 8.5 with sodium hydroxide.

A commercial latex DL920, as described above, was used in comparative example 4. Compared to the comparative latex, all the latexes of the present invention could be formulated at higher solids. They showed a lower dewatering of the coating colors and even at 1.1 - 2.1 percent higher solids loads showed comparable or lower high shear viscosities (see Table 4, Comparative Example 4, 69.4 percent solids, versus Examples 6 to 10 of the present invention 70.5-71.3 percent solids). In addition to the formulation solids increase, the latexes also could be prepared at much higher solids loads with low latex viscosity as shown in Table 4 (viscosity at 59 percent solids).

Table 4

| Example | N° | C.E.4 | 6 not according to invention | 7 not according to invention | 8 not according to invention | 9 (invention) | 10 (invention) |
|---|---|---|---|---|---|---|---|
| Feed time variation | min | | 185-205 | 185-220 | 200-220 | 160-190 | 180-200 |
| Particle sizes (nm) | | 140 nm | 23nm 23.5 percent | 19 nm 20.2 percent | 19 nm 16.5 percent | 19 nm 13 percent | 16 nm 10 percent |

(continued)

| Example | N° | C.E.4 | 6 not according to invention | 7 not according to invention | 8 not according to invention | 9 (invention) | 10 (invention) |
|---|---|---|---|---|---|---|---|
| | | | 145 nm 76.5 percent | 145 nm 79.8 percent | 145 nm 83.5 percent | 115 nm 87 percent | 115 nm 90 percent |
| Brookfield Viscosity (20 rpm) at 59 percent latex solids, pH= 6.0 | Cps | Not possible* | 2550 | 2310 | 1670 | 2390 | 2075 |
| Maximum formulation solids (percent) | | 69.4 | 70.6 | 70.9 | 70.8 | 71.5 | 71.1 |
| Brookfield at max formulation solids (mPa·s) | 20 rpm | 3740 | 5050 | 4650 | 5640 | 3650 | 2850 |
| | 100rpm | 1200 | 1540 | 1608 | 1984 | 1205 | 1122 |
| Haake at max formulation solids mPa·s | 1 000 1/s | 143.8 | 173.6 | 185.7 | 209.4 | 154.4 | 147.4 |
| | 2 500 1/s | 111.6 | 124.0 | 140.4 | 149.0 | 119.7 | 113.3 |
| | 4000 1/s | 102.9 | 112.5 | 130.2 | 131.7 | 111.8 | 104.0 |
| ACAV at max formulation solids mPa·s | 100 000 1/s | 123 | 91.0 | 125.2 | 122.3 | 107.5 | 84.2 |
| | 300 000 1/s | 110 | 95.6 | 122.3 | 121.2 | 110.9 | 88.5 |
| | 500 000 1/s | 105 | 90.2 | 115.2 | 107.9 | 102.3 | 86.3 |
| ABO Dewatering | | 90.5 | 63.75 | 66.10 | 65.25 | 76.50 | 79.50 |
| * 59 percent solids not reachable without solidifying the latex | | | | | | | |

As described in Table 5, paper properties, when using the high-solids bimodal latexes, show better paper gloss, higher binding strength and lower ink refusal, when compared to the comparative formulation containing a monomodal, good binding and printability latex.

Table 5

| Example | N° | C.E.4 | 6 | 7 | 8 | 9 | 10 |
|---|---|---|---|---|---|---|---|
| Paper Gloss 75° | percent | 75.8 | 77.8 | 77.4 | 77.5 | 76.6 | 76.1 |
| Ink Gloss 75° | 1.6 g/m$^2$ percent | 94.8 | 94.4 | 96.0 | 94.8 | 95.2 | 95.4 |
| K & N Drop | percent | 5.15 | 5.10 | 3.81 | 5.02 | 4.20 | 4.10 |
| IGT Dry Pick | cm/s | 69.5 | 80 | 74 | 82 | 75 | 73 |

(continued)

| Example | N° | C.E.4 | 6 | 7 | 8 | 9 | 10 |
|---|---|---|---|---|---|---|---|
| New Wet Pick | Ink transfer (percent) | 73 | 68 | 70 | 69 | 71 | 66 |
| | Ink refusal (percent) | 26 | 32 | 28 | 28 | 27 | 30 |
| | Wet pick (percent) | 1 | 0 | 2 | 3 | 2 | 4 |
| Ink Set Off | Density after 15 sec | 0.35 | 0.29 | 0.38 | 0.40 | 0.27 | 0.20 |
| | Density after 30 sec | 0.05 | 0.03 | 0.07 | 0.07 | 0.06 | 0.04 |
| | Density after 60 sec | 0.01 | 0.00 | 0.01 | 0.02 | 0.01 | 0.01 |
| Ink refusal | percent | 36 | 18 | 28 | 29 | 24 | 23 |

Example 11 and Comparative Example 5

Example 11 was prepared according to the proceduregiven for examples 2 to 5. An additional stream containing 2 parts Dowfax 2A1® was started after 170 minutes for 30 minutes. The final latex contained 30 weight percent of particles having a diameter of 30 nm and 70 percent of particles with a diameter of 140 nm. The latex had a viscosity 250 mPa·s at 57 percent solids and a pH of 6.5.
A monomodal latex, showing good film coater runability, DL 966 (commercially available from Dow Europe S.A.), was used in Comparative example 5.

Coating colors were prepared by mixing 70 parts fine ground calcium carbonate, 30 parts delaminated clay, 0.5 part carboxymethyl cellulose and 11.5 parts latex. Misting and rod spitting were ranked on a scale of 1 to 10 with the lower numbers showing better performance.

Table 6

| | Rod spitting | Misting |
|---|---|---|
| Example 11 | 1 | 2 |
| Comparative example 5 | 4 | 5 |

Latex of example 11 showed an excellent combination of low misting and rod spitting, when compared to the monomodal latex.

**Claims**

1.  An aqueous dispersion of polymer particles having at least two separate maxima of the particle size distribution, wherein the two maxima are in the range from 13 to 50 nm and from 90 to 140nm, respectively, and the weight ratio of the small particles to the large particles is from 10/90 to 40/60, and wherein the solids content is higher than 55 percent.

2.  The dispersion according to Claim 1 wherein the two separate maxima of the particle size distribution are in the range of from 20 to 40 mn and 110 to 140 nm, respectively.

3.  The dispersion according to any of Claims 1 to 2 wherein the ratio of the small particles to the large particles is within the range of from 20/80 to 35/65.

4.  The dispersion according to Claim 3 wherein the ratio of the small particles to the large particles is within the range of from 24/76 to 30/70.

5.  The dispersion according to any of Claims 1 to 4 wherein the large and small particles have the same composition.

6.  The dispersion according to any of Claims 1 to 4 wherein the small and large particles have a different polymer composition.

7. The dispersion according to any of Claims 1 to 6 wherein the solids content is higher than 58 percent.

8. The dispersion according to any of Claims 1 to 7 which has a Brookfield viscosity of less than 2500 mPa·s at 20 rpm and at a solids content of higher than 56 percent.

9. A formulation containing a dispersion according to any of Claims 1 to 8 which further comprises a filler or a pigment

10. The formulation according to Claim 9 wherein the solid content is higher than 60 wt percent.

11. The formulation according to Claim 10 wherein the solid content is higher than 68 wt percent.

12. The formulation according to Claim 11 wherein the solid content is higher than 72 wt percent.

13. The formulation according to any of Claims 9 to 12 wherein the solid content comprises 1 to 50 parts of polymer particles per 100 parts of the filler/pigment.

14. A process for the preparation of the dispersion according to any of Claims 1 to 8 which comprises blending two dispersions containing the small or the large particles, respectively.

15. The process for the preparation of the dispersion according to any of Claims 1 to 8 wherein the small particles are generated in the presence of the large particles during the emulsion polymerization of the desired monomers.

16. The process according to Claim 15 wherein the different sizes of the particles are caused by the sequential addition of seed particles.

17. The process according to Claim 15 wherein seed particles of different sizes are added concurrently.

18. The process according to Claim 15 wherein during the polymerization one or more emulsifier(s) are added at different times of the progress of the polymerization, thus generating particles of different particle sizes.

19. Use of the dispersion of any of Claims 1 to 8 or formulation of any of claims 9 to 13 for coating paper.

20. Use of the dispersion of any of Claims 1 to 8 or formulation of any of claims 9 to 13 for coating paper with a film coater.

21. A coated article comprising a fibrous sheet continuously coated on at least one surface with the dispersion of any of Claims 1 to 8 or the formulation of any of Claims 9 to 13.

**Patentansprüche**

1. Wässrige Dispersion von Polymerteilchen mit mindestens zwei getrennten Maxima der Teilchengrößeverteilung, worin die beiden Maxima im Bereich von 13 bis 50 nm bzw. 90 bis 140 nm sind und das Gewichtsverhältnis der kleinen Teilchen zu den großen Teilchen von 10/90 bis 40/60 ist und worin der Feststoffgehalt größer als 55 Prozent ist.

2. Dispersion nach Anspruch 1, worin die beiden getrennten Maxima der Teilchengrößeverteilung im Bereich von 20 bis 40 nm bzw. 110 bis 140 nm sind.

3. Dispersion nach einem der Ansprüche 1 bis 2, worin das Verhältnis der kleinen Teilchen zu den großen Teilchen im Bereich von 20/80 bis 35/65 ist.

4. Dispersion nach Anspruch 3, worin das Verhältnis der kleinen Teilchen zu den großen Teilchen im Bereich von 24/76 bis 30/70 ist.

5. Dispersion nach einem der Ansprüche 1 bis 4, worin die großen und kleinen Teilchen die gleiche Zusammensetzung aufweisen.

6. Dispersion nach einem der Ansprüche 1 bis 4, worin die kleinen und großen Teilchen eine verschiedene Polymerzusammensetzung aufweisen.

7. Dispersion nach einem der Ansprüche 1 bis 6, worin der Feststoffgehalt kleiner als 58 Prozent ist.

8. Dispersion nach einem der Ansprüche 1 bis 7, die eine Brookfield-Viskosität von kleiner als 2500 mPa·s bei 20 Upm und bei einem Feststoffgehalt von größer als 56 Prozent hat.

9. Formulierung, enthaltend eine Dispersion nach einem der Ansprüche 1 bis 8, weiterhin umfassend einen Füller oder ein Pigment.

10. Formulierung nach Anspruch 9, worin der Feststoffgehalt größer als 60 Gew.-Prozent ist.

11. Formulierung nach Anspruch 10, worin der Feststoffgehalt größer als 68 Gew.-Prozent ist.

12. Formulierung nach Anspruch 11, worin der Feststoffgehalt größer als 72 Gew.-Prozent ist.

13. Formulierung nach einem der Ansprüche 9 bis 12, worin der Feststoffgehalt 1 bis 50 Teile Polymerteilchen pro 100 Teile des Füllers/Pigments umfasst.

14. Verfahren zur Herstellung der Dispersion nach einem der Ansprüche 1 bis 8, umfassend das Mischen von zwei Dispersionen, die die kleinen bzw. großen Teilchen enthalten.

15. Verfahren zur Herstellung der Dispersion nach einem der Ansprüche 1 bis 8, worin die kleinen Teilchen in der Gegenwart der großen Teilchen während der Emulsionspolymerisation des gewünschten Monomers erzeugt werden.

16. Verfahren nach Anspruch 15, worin die verschiedenen Größen der Teilchen durch die schrittweise Zugabe von Impfteilchen bewirkt werden.

17. Verfahren nach Anspruch 15, worin Impfteilchen mit verschiedenen Größen gleichzeitig zugegeben werden.

18. Verfahren nach Anspruch 15, worin während der Polymerisation ein oder mehrere Emulgiermittel zu verschiedenen Zeiten des Polymerisationsfortschritts zugegeben werden, wobei Teilchen mit verschiedenen Teilchengrößen erzeugt werden.

19. Verwendung der Dispersion nach einem der Ansprüche 1 bis 8 oder der Formulierung nach einem der Ansprüche 9 bis 13 zum Beschichten von Papier.

20. Verwendung der Dispersion nach einem der Ansprüche 1 bis 8 oder der Formulierung nach einem der Ansprüche 9 bis 13 zum Beschichten von Papier mit einem Beschichter.

21. Beschichteter Gegenstand, umfassend ein Faserblatt, das gleichmäßig auf mindestens einer Oberfläche mit der Dispersion nach einem der Ansprüche 1 bis 8 oder der Formulierung nach einem der Ansprüche 9 bis 13 beschichtet ist.

**Revendications**

1. Dispersion aqueuse de particules de polymère dont la distribution de tailles de particules présente au moins deux maximums distincts, ces deux maximums se situant respectivement dans les intervalles allant de 13 à 50 nm et de 90 à 140 nm et le rapport pondéral des petites particules aux grandes particules valant de 10/90 à 40/60, et dont la teneur en solides est supérieure à 55 %.

2. Dispersion conforme à la revendication 1, dans laquelle les deux maximums distincts de la distribution de tailles de particules se situent respectivement dans les intervalles allant de 20 à 40 nm et de 110 à 140 nm.

3. Dispersion conforme à l'une des revendications 1 et 2, dans laquelle le rapport des petites particules aux grandes particules se situe dans l'intervalle allant de 20/80 à 35/65.

4. Dispersion conforme à la revendication 3, dans laquelle le rapport des petites particules aux grandes particules se situe dans l'intervalle allant de 24/76 à 30/70.

5. Dispersion conforme à l'une des revendications 1 à 4, dans laquelle les grandes particules et les petites particules ont la même composition.

6. Dispersion conforme à l'une des revendications 1 à 4, dans laquelle les petites particules et les grandes particules ont des compositions en polymère différentes.

7. Dispersion conforme à l'une des revendications 1 à 6, dont la teneur en solides est supérieure à 58 %.

8. Dispersion conforme à l'une des revendications 1 à 7, qui présente une viscosité Brookfield inférieure à 2500 mPa.s à 20 t/min et pour une teneur en solides supérieure à 56 %.

9. Formulation contenant une dispersion conforme à l'une des revendications 1 à 8, qui comprend en outre une charge ou un pigment.

10. Formulation conforme à la revendication 9, dans laquelle la teneur en solides est supérieure à 60 % en poids.

11. Formulation conforme à la revendication 10, dans laquelle la teneur en solides est supérieure à 68 % en poids.

12. Formulation conforme à la revendication 11, dans laquelle la teneur en solides est supérieure à 72 % en poids.

13. Formulation conforme à l'une des revendications 9 à 12, dans laquelle les solides contenus comprennent 1 à 50 parties de particules de polymère pour 100 parties de charge/pigment.

14. Procédé de préparation d'une dispersion conforme à l'une des revendications 1 à 8, qui comprend le fait de mélanger deux dispersions contenant respectivement les petites particules ou les grandes particules.

15. Procédé de préparation d'une dispersion conforme à l'une des revendications 1 à 8, dans lequel les petites particules sont formées en présence des grandes particules, au cours de la polymérisation en émulsion des monomères voulus.

16. Procédé conforme à la revendication 15, dans lequel les différences de tailles des particules sont provoquées par addition successive de particules germes.

17. Procédé conforme à la revendication 15, dans lequel on ajoute en même temps des particules germes de différentes tailles.

18. Procédé conforme à la revendication 15, dans lequel, au cours de la polymérisation, on ajoute un ou plusieurs émulsifiant(s) à divers moments du déroulement de la polymérisation, ce qui provoque la formation de particules de différentes tailles.

19. Utilisation d'une dispersion conforme à l'une des revendications 1 à 8, ou d'une formulation conforme à l'une des revendications 9 à 13, pour le couchage de papier.

20. Utilisation d'une dispersion conforme à l'une des revendications 1 à 8, ou d'une formulation conforme à l'une des revendications 9 à 13, pour le couchage de papier à l'aide d'une coucheuse à film.

21. Article couché, comprenant une feuille de matière fibreuse dont au moins une face est revêtue de manière continue d'une couche de dispersion conforme à l'une des revendications 1 à 8 ou d'une couche de formulation conforme à l'une des revendications 9 à 13.

**EP 1 354 009 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4474860 A
- US 4567099 A
- CA 2135450
- US 3404116 A
- US 3399080 A
- US 4456726 A
- DE 274229